(19) Europäisches Patentamt
European Patent Office
Office européen des brevets

(11) **EP 0 450 522 B1**

(12) **EUROPEAN PATENT SPECIFICATION**

(45) Date of publication and mention
of the grant of the patent:
**02.01.1997 Bulletin 1997/01**

(51) Int Cl.6: **G06F 15/80**

(21) Application number: **91105034.2**

(22) Date of filing: **28.03.1991**

(54) **A learning method for a data processing system**

Lernverfahren für Datenverarbeitungsanlage

Méthode d'apprentissage pour un système de traitement de données

(84) Designated Contracting States:
**BE DE FR GB IT NL SE**

(30) Priority: **04.04.1990 JP 88163/90**

(43) Date of publication of application:
**09.10.1991 Bulletin 1991/41**

(73) Proprietors:
• **YOZAN INC.**
**Tokyo 155 (JP)**
• **SHARP KABUSHIKI KAISHA**
**Osaka 545 (JP)**

(72) Inventors:
• **Takatori, Sunao**
**Tokyo 155 (JP)**
• **Yamamoto, Makoto**
**Tokyo 155 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
• **IEEE INTERNATIONAL CONFERENCE ON
NEURAL NETWORKS vol. 1, 24 July 1988, SAN
DIEGO,USA pages 465 - 472 SHEPANSKI 'Fast
learning in artificial neural systems : Multilayer
perceptron training using optimal estimation'**
• **IEEE FIRST INTERNATIONAL CONFERENCE ON
NEURAL NETWORKS vol. 4, 21 June 1987, SAN
DIEGO,USA pages 635 - 642 MCAULAY
'Engineering design neural networks using split
inversion learning'**
• **AIP CONFERENCE PROCEEDINGS 151 :
NEURAL NETWORKS FOR COMPUTING 1986,
SNOWBIRD, USA pages 283 - 298 LAPEDES
'Programming a massively parallel computation
universal system : static behaviour'**

## Description

## FIELD OF THE INVENTION

The present invention is related to the data processing system based on the concept of neural network.

## BACKGROUND OF THE INVENTION

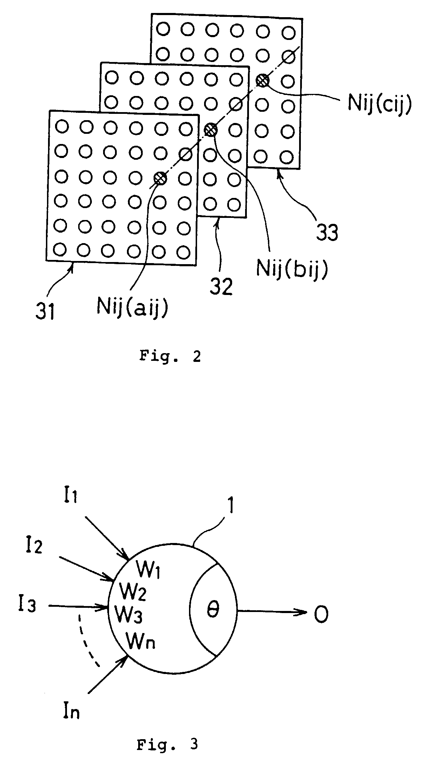

The neural network in such kind of data processing system is constructed in layer state by settling parallelly neural cell model 1 in fig. 3 ("neuron", hereinafter). The neuron in each layer combines by synapses with all the neurons in adjacent other layer and inputs and outputs data. Concerning to neuron 1, weights W1, W2, W3, ..., Wn are multiplied to data I1, I2, I3, ..., In inputted from outside, and data O is outputted corresponding to the comparison between the sum of the multiplication and threshold θ.

Various methods are possible for the comparison. When normalized function 1[f] is adopted, output data O is expressed as formula (1).

$$O=1 \ [\Sigma Wn \cdot In - \theta] \qquad (1)$$

When $\Sigma Wn \cdot In$ is more than or equal to threshold θ, the neuron ignites and output data O is "1": when $\Sigma Wn \cdot In$ is less than threshold θ, output data O is "0".

Conventional neural network forms a neural layer by setting parallelly such neurons and by connecting the neural layers in series. A conventional Neural Network is comprised of, for example, 3 layers of input layer, middle layer and output layer as Perceptrons suggested by Rosenblatt: a neuron in each layer is connected with all neurons in adjacent layers by synapses.

## SUMMARY OF THE INVENTION

In such a data processing system, the operation to adapt the weight of synapse of each neuron is called "learning". It is an important problem to guarantee its realization and to perform it efficiently. For example, in the back-propagation method, there are problems of getting out of a local minimum and of a convergence time. Especially the tendency is strong in neural network including a lot of middle layers.

The present invention intends to solve the above problems of the prior art and has as an object to provide a learning method with the ability to execute efficient learning into the middle layer.

The present invention relates to a learning method as set out in Claim 1.

## BRIEF DESCRIPTION OF THE DRAWINGS

Fig. 1 shows the approximate structure of character recognition system applied the first embodiment of the present invention.

Fig. 2 shows the outline structure of neuron in input layer, middle layer and output layer.

Fig. 3 shows the outline structure of an embodiment of a neuron.

Fig. 4 shows the diagram of the relationship between the number of learning and weight.

Figs. 5 (a), (b) and (c) show ignition pattern of each layer when neurons in a middle layer have the tendency of ignition in the case that the ignition rate of neuron in corresponding area is more than 15%.

Figs. 6 (a), (b) and (c) show ignition pattern of each layer when neurons in a middle layer have the tendency of ignition in the case that the ignition rate of neuron in corresponding area is more than 20%.

Figs. 7 (a), (b) and (c) show ignition pattern of each layer when neurons in a middle layer have the tendency of ignition in the case that the ignition rate of neuron in corresponding area is more than 25%.

Figs. 8 (a), (b) and (c) show the neurons in input layer, middle layer and output layer in the case that the arrangement of neurons can be divided in honeycomb state.

1 and N...neuron, 31...input layer, 32...middle layer, 33...output layer.

## PREFERRED EMBODIMENT OF THE PRESENT INVENTION

Hereinafter, the present invention is explained with reference to the attached drawings.

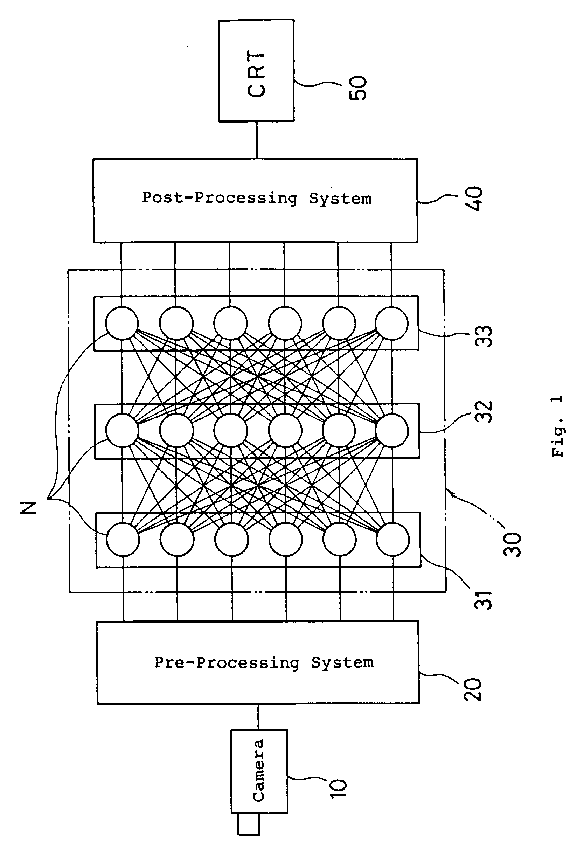

Fig. 1 shows a character recognition system comprising data processing system related to the first embodiment. The character recognition system comprises video camera 10, preprocessing system 20, data processing system 30, post-processing system 40 and display 50. Video camera 10 is settled to input characters/letters and connected to preprocessing system 20. Preprocessing system 20 is, for example, a well-known image processing system, which extracts the characteristics of inputted character/letter (the number of edge points or branch points, for instance) and outputs the data to data processing system 30. Data processing system 30, constructs a neural network as described later, recognizes a character/letter based on the characteristics data inputted from preprocessing system 20, and outputs the data according to the recognition result to post-processing system 40. Recognition signal comprises character codes for instance. Post-processing system 40 stores the output data as, for example, word processor data and simultaneously outputs to display 50. Display 50 is constructed from CRT and indicates the characters/letters recognized by data processing system 40 on the display.

The neural network used to construct data processing system 30 is constructed as a part of the hardware of a computer. Data processing system 30 is expressed in Fig. 1 as a model. It comprises input layer 31, middle layer 32, and output layer 33: middle layer 32 is settle between input layer 31 and output layer 33. In the present embodiment, each layer 31, 32, and 33 comprises the same number of neurons of N: neuron in input layer 31 are connected to all the neurons comprised in middle layer 32, and those in middle layer 32 are connected to all the neurons comprised in output layer 33.

As mentioned above with referring to Fig. 3, each neuron N outputs the data of "1" or "0" according to the normalized function in formula (1). Neuron N is constructed by means of operational amplifiers, for example. Weight Wn to be multiplied to the data to be inputted to each neuron N is obtained by means of a changeable resister connected to input terminal. Threshold function is realized by means of switching elements. That is, learning is executed amending output data and changing weight Wn by means of a changeable resister according to output data of each neuron.

Fig. 2 shows input layer 31, middle layer 32 and output layer 33 as a model: each layer 31, 32 and 33 comprises the same number of neurons. Here, for a simple explanation, the number of neurons is 36 in each layer 31, 32 and 33: neurons are arranged 6 in lateral and longitudinal directions in each layer. It is presumed that the point in left below edge as the origin, and that the neuron in the location of i-th left and j-th upper as Nij.

Each neuron in input layer 31 ignites by characteristics data obtained through video camera 10. When ignition combination of N11, N12, N21 and N22 expresses the number of edge points, and N13, N14, N23 and N24 expresses the number of branch point, the ignition pattern of neurons in input layer 31 is decided artificially according to characters/letters to be inputted.

On the other hand in output layer 33, a character/letter is expressed by neuron Nii on diagonal line from the edge on lower left to the edge on upper right. That is, the neurons on the diagonal line express the character code of the character/letter, and the ignition pattern of neuron in output layer 33 is decided artificially. In the present embodiment, the kind of ignition pattern is 64 for neuron Nii on diagonal line. Therefore, it is possible to recognize 64 kinds of characters/letters: recognition of alphabets is possible, for example.

Before executing learning of character/letter recognition, neurons in output layer 33 do not ignite even if character/letter data is inputted to data processing system 30. This neuron can lear by igniting: its learning is concluded when a certain ignition pattern is appeared according to inputted character/letter data. Input and output pattern for learning is the representative data to be processed in neural network: the data to be actually processed exist in a distributed form. Learning has been executed until association for the representative input and output data is performed adequately. When learning is concluded, input layer 31 and output layer 33 show ignition pattern decided artificially according to inputted character/letter data as mentioned above. It is presumed that ignition pattern in each layer of input layer 31, middle layer 32 and output layer 33 changes smoothly in these layers of 31, 32 and 33. In the present embodiment, the weights in middle layer 32 and output layer 33 are changed in order to ignition pattern in these layers change smoothly on learning process.

First, it is decided if neuron Nij in middle layer 32 ignites or not considering the ignition of the neuron adjacent to each neuron Nij in input layer 31 and output layer 33 corresponding to the neuron Nij. That is, when neurons ignite or are to be ignited with more than a certain rate among corresponding neuron Nij and neurons around it in input layer 31 and output layer 33, neuron Nij in middle layer 32 is judged to have the tendency of ignition. Weights of designated neurons in middle layer 32 and output layer 33 are increased in order to obtain such ignition.

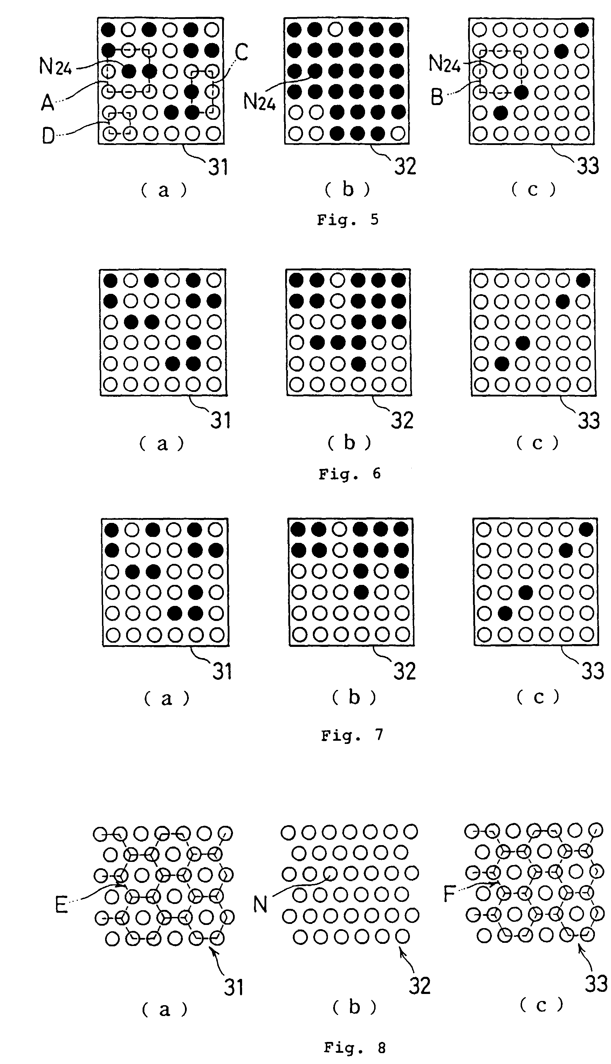

The judging method if neurons in middle layer are to ignite or not is described referring to Fig. 5 (a), (b) and (c). Fig. 5 (a) shows the ignition pattern in input layer 31, Fig. 5 (b) shows that in middle layer 32, Fig. 5 (c) shows that in output layer 33: in these figures, black circles show ignited neurons, white circles show united neurons. In this embodiment, input layer 31 shows the ignition pattern as in the diagram according to characteristics data of inputted character/letter: the ignition pattern in output layer 33 have to be what is shown in the diagram so as to recognize it. That is, the ignition pattern in input layer 31 in the diagram is fixed according to input character/letter: the ignition pattern in output layer 33 is what on the completion of learning. The ignition pattern in middle layer 32 is the one expected by the method of the present embodiment.

In Fig. 5 (a), (b) and (c), first, it is examined the ignition condition of, for instance, neurons N24 and 8 of neurons adjacent to it as to neuron N24 in input layer 31 corresponding to neuron N24 in middle layer 32. That is, examining ignition condition of neurons in the area surrounded by broken line A, 3 neurons ignite in it. In the same way, examining the ignition distribution of neuron N24 in output layer 33 corresponding to N24 in middle layer 32 and neurons adjacent to it - that is, the area surrounded by broken line B - one neuron ignites. Therefore, 4 neurons ignite among 18 neurons in input layer 31 and output layer 33 corresponding to neuron N24 in middle layer 32 and adjacent neurons to it. Neuron N24 in middle layer 32 is judged to have the tendency of ignition when it is decided that the neuron in middle layer 32 is to ignite in such a case of more than or equal to 15% of neurons ignite among the neurons in areas A and B. As for Fig. 5 (a), (b) and (c), it is decided that a neuron in middle layer 32 has the tendency of ignition when more than or equal to 15% of neurons ignite among the neurons in input layer 32 and output layer 33 corresponding to the neuron in middle layer 32.

Concerning to the neurons on an edge, the ignition condition of 6 neurons shown with broken line C is examined: concerning to the neurons on the corner, that of 4 neurons shown with broken line D is examined.

In Fig. 5 (a), (b) and (c), 30 of black neurons are judged to have the tendency of ignition among the neurons in middle layer 32. On the character/letter recognition learning, only certain values are increased in order for the weight of each neuron in middle layer 32 and output layer 33 to obtain the ignition pattern obtained in this way.

The increase of weight will be explained using Fig. 3, when output data O of neuron 1 in middle layer is the same value on ignition (for instance "1"), the weight of synapse ("W2" and "W3" in this case) corresponding to the data inputted from the ignited neuron (for instance "I2" and "I3") is, for example, increased 5% among the neurons in input layer connected to neuron 1. The synapse weight of a neuron in output layer is processed in the same way: as described above, the weight of synapse corresponding to the neuron in middle layer decided to be ignited is increased 5%, for example.

The weight of middle layer 32 and output layer 33 is increased in order for ignition pattern to be changed smoothly among each layer of input layer 31, middle layer 32 and output layer 33. Here, after deciding whether each neuron in input layer 31 and output layer 33 is to ignite on the same frequency as much as possible for all input characters/letters, it is possible for each neuron in middle layer 32 to ignite at the some time. In this way it is possible to prevent to fall in local minimum by it, and each neuron in middle layer 31 ignites at the some time. It means that it is possible to avoid the generation of neurons with no ignition and to work neurons in middle layer 32 efficiently.

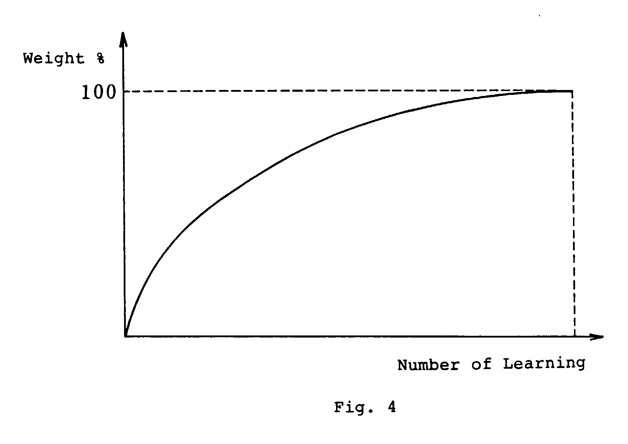

The increase of synapse weight on one learning changes as in Fig. 4 according to the number of learning. The learning of a whole system is executed gradually by plural learning, and simultaneously, fine adjustment is carried out for fine change. The learning speed is developed by rapid increase of weight in the beginning.

In the embodiment above, middle layer 32 is connected to input layer 31 and output layer 33, that is, the layers are 3. However, the present invention does not set limits on embodiments as 3 layers of neural networks: it is possible to apply it for neural network with more than 4 layers. In this case, selecting the first middle layer before everything, the weight of synapse in the first middle layer and output layer is increased in order that each neuron in the middle layer has a tendency to ignite when the neurons in input layer and output layer corresponding each other and neurons adjacent to them ignite with more than a certain rate. When learning is concluded so far as a certain step concerning to all the input characters/letters, adding the second middle layer newly, the weight of synapse is increased in the second middle layer and the layer connected to output side of it (output layer or the first middle layer), considering whether corresponding neurons and adjacent to it are to ignite or not with more than a certain rate, in the same way as to the second middle layer. Consequently, weight distribution in the case with 4 layers can be obtained. As to the case with more than 5 layers, the same process is performed.

Figs. 6 (a), (b) and (c) show ignition patterns in layers 31, 32 and 33 on recognizing the same character/letter as in Figs. 5 (a) to (c): Figs. 6 (a) and (c) are quite the same as Figs. 5 (a) and (c). The ignition pattern in middle layer 32 is decided to have the tendency of ignition when the neurons corresponding to those in input layer 31, output layer 33 and adjacent to them ignite more than 20%, different from Fig. 5 (b).

Figs. 7 (a), (b) and (c) also show ignition patterns in each layer on recognizing the same character/letter as in Figs. 5 (a) to (c): Figs. 6 (a) and (c) are quite the same as Figs. 5 (a) and (c). In Figs. 7 (a) to (c), the ignition pattern in middle layer 32 is decided to have the tendency to ignite when neurons corresponding to those in input layer 31, output layer 33 and adjacent to them ignite more than 25%.

As understood easily from the comparison with Fig. 5 (b), Fig. 6 (b) and Fig. 7 (b), the ignition pattern in middle layer 32 has the tendency with the characteristics of ignition pattern in both input layer and output layer. The higher the ignition rate of a neuron in the area corresponding to input layer 31 and output layer 33 is the smaller is the number of neurons that ignite in middle layer 32.

Though the areas A, B, C and D to decide neurons adjacent to each neuron are rectangles in embodiments above, a form of an area is not set a limit to it. When the arrangement of neurons can be divided in the state of honeycomb, the form of the area is hexagon as shown in Figs. 8 (a), (b) and (c). In this case, area E in input layer 31 and area F in output layer corresponding to neuron N in middle layer 32 are comprised of 7 neurons. Neuron N in middle layer 32 has the tendency to ignite when 14 neurons in area E and F ignite with more than a certain rate.

The input and output data for a neuron is not set a limit to binarized one: it may be multi-valued and analog data when the data is digital.

An output layer may be constructed to define a character/letter for recognition by all neurons: it is not necessary to be constructed to express character codes by neurons on diagonal line.

The number of neurons in the layers of 31, 32 and 33 is not set a limit to 36: it is possible to settle it according to the number of kinds of characters/letters to be recognized.

The present invention can be applied to not only character/letter recognition but also to pattern recognition and voice recognition.

As mentioned above, it is possible to execute effective learning on middle layer of the neural network of the present invention.

## Claims

1. A learning method for transforming an untrained network to a trained network, said network comprising an input layer (31), a middle layer (32), and an output layer (33), each said layer including a plurality of neurons, each said neuron being a signal processing element, said middle layer being arranged between said input and output layers wherein each neuron in said middle layer is connected to each neuron in said input and output layers, said method comprising the steps of:

   determining an activation pattern of said neurons in said input layer;

   determining an activation pattern of said neurons in said output layer;

   defining two neighborhoods of said neurons one in each said input and output layers corresponding to a neuron in said middle layer;

   determining a rate of activation in said neighborhood of neurons, said rate being the total number of neurons becoming active in said neighborhood in said input and output layers divided by the total number of neurons in said neighborhood in said input and output layers;

   comparing said rate to a threshold value;

   determining that said neuron in said middle layer has a tendency to become active when said rate is greater than said threshold value;

   if said neuron in said middle layer has a tendency to become active, increasing the value of weights applied to all neurons in said input layer which are connected to said neuron in said middle layer and weights applied to all neurons in said output layer which are connected to said neuron in said middle layer, in order to increase the likelihood of activation of said neuron in said middle layer; and

   repeating the above steps for each said neuron in said middle layer, thereby generating a desired activation pattern of neurons in said middle layer corresponding to said trained network.

2. The learning method of claim 1 further including the steps of:

   a. adding an additional middle layer between said input layer and said middle layer or between said middle layer and said output layer, said additional middle layer having a plurality of neurons;

   b. connecting each neuron in said additional middle layer to each neuron in the two layers adjacent to said additional middle layer;

   c. defining two neighborhoods of neurons one in each said adjacent layers corresponding to a neuron in said additional middle layer;

   d. determining a rate of activation in said neighborhood of neurons, said rate being the total number of neurons becoming active in said neighborhood, divided by the total number of neurons in said neighborhood;

   e. comparing said rate to a threshold value;

   f. if said rate is greater than the threshold value, increasing the value of weights applied to all neurons in one of said adjacent layers which are connected to said neuron in said additional middle layer and weights applied to all neurons in said other adjacent layer which are connected to said neuron in said additional middle layer, in order to increase the likelihood of of said neuron being active in said additional middle layer, and

   g. repeating steps c.-f. for each neuron in said additional middle layer, thereby generating a desired pattern of neurons being active in said additional middle layer corresponding to said trained network.

3. The learning method of claim 1 wherein said neighborhood includes a neuron in said input layer and a neuron in said output layer corresponding to the same position as said neuron in said middle layer and all neurons adjacent to said neuron in said input layer and said output layer.

4. The learning method of claim 1, wherein said learning method is a method for recognizing characters, said pattern of neurons being active in said input layer corresponds to characteristics data of an image, and said pattern of neurons being active in said output layer corresponds to character data of said image.

## Patentansprüche

1. Lernverfahren zum Umwandeln eines untrainierten Netzwerkes in ein trainiertes Netzwerk, wobei das Netzwerk eine Eingangsschicht (31), eine Mittelschicht (32) und eine Ausgangsschicht (33) aufweist, von denen jede eine Vielzahl von Neuronen enthält und jedes Neuron ein Signalverarbeitungselement ist, wobei weiterhin die mittlere Schicht so angeordnet ist, daß sie zwischen der Eingangsschicht und der Ausgangsschicht liegt, derart, daß jedes Neuron der mittleren Schicht mit jedem Neuron der Eingangs- und Ausgangsschicht verbunden ist und wobei das Verfahren folgende Schritte aufweist:

Bestimmen eines Aktivierungsmusters der Neuronen in der Eingangsschicht;

Bestimmen eines Aktivierungsmusters der Neuronen in der Ausgangsschicht;

Definieren von zwei Nachbarumgebungen für die Neuronen in der Eingangsschicht und der Ausgangsschicht entsprechend einem Neuron der mittleren Schicht;

Bestimmen einer Aktivierungsrate innerhalb der Nachbarumgebung der Neuronen, wobei die Rate der gesamten Anzahl von Neuronen, die in der Nachbarumgebung innerhalb der Eingangsschicht und der Ausgangsschicht aktiv sind, dividiert durch die Gesamtanzahl der Neuronen in der Nachbarschaft der Eingangsschicht und der Ausgangsschicht entspricht;

Vergleichen der Rate mit einem Schwellwert;

Bestimmen, daß das Neuron der mittleren Schicht eine Aktivierungstendenz aufweist, wenn die Rate größer ist als der Schwellwert;

für den Fall, daß das Neuron in der mittleren Schicht eine Aktivierungstendenz aufweist, Erhöhen der Gewichtungswerte der Neuronen in der Eingangsschicht, die mit dem Neuron in der mittleren Schicht verbunden sind und der Neuronen in der Ausgangsschicht, die mit dem Neuron in der Mittelschicht verbunden sind, um die Wahrscheinlichkeit einer Aktivierung des Neurons in der mittleren Schicht zu erhöhen; und

Wiederholen der obigen Schritte für jedes Neuron in der mittleren Schicht, wodurch ein gewünschtes Aktivierungsmuster von Neuronen in der mittleren Schicht entsprechend einem trainierten Netzwerk erzeugt wird.

**2.** Lernverfahren nach Anspruch 1, weiterhin aufweisend die Schritte:

a) Addieren einer zusätzlichen Mittelschicht zwischen der Eingangsschicht und der Mittelschicht oder zwischen der Mittelschicht und der Ausgangsschicht, wobei die zusätzliche Mittelschicht eine Vielzahl von Neuronen aufweist;

b) Verbinden jedes Neurons in der zusätzlichen Mittelschicht mit jedem Neuron in den zwei angrenzenden Schichten zu der zusätzlichen Mittelschicht;

c) Definieren von zwei Nachbarumgebungen von Neuronen in den beiden angrenzenden Schichten der zusätzlichen Mittelschicht;

d) Bestimmen einer Aktivierungsrate in der Nachbarschaftsumgebung, wobei die Rate der gesamten Anzahl von aktiven Neuronen in der Nachbarschaft, dividiert durch die gesamte Anzahl von Neuronen in der Nachbarschaft entspricht;

e) Vergleichen der Rate mit einem Schwellwert;

f) für den Fall, daß die Rate größer ist als der Schwellwert, Erhöhen der Gewichtungswerte, die den Neuronen in der einen angrenzenden Schicht zur zusätzlichen Mittelschicht zugefügt werden und der Gewichte, die allen Neuronen in der anderen angrenzenden Schicht zugefügt werden, die mit dem Neuron in der zusätzlichen Mittelschicht verbunden sind, um die Wahrscheinlichkeit zu erhöhen, daß Neuronen in der zusätzlichen Mittelschicht aktiviert werden, und

g) Wiederholen der Schritte c) bis f) für jedes Neuron in der zusätzlichen mittleren Schicht, wodurch ein gewünschtes Aktivierungsmuster für Neuronen in der zusätzlichen Mittelschicht erzeugt wird entsprechend einem trainierten Netzwerk.

**3.** Lernverfahren nach Anspruch 1, wobei die Nachbarschaft ein Neuron in der Eingangsschicht und ein Neuron in der Ausgangsschicht entsprechend der Position des Neurons in der Mittelschicht aufweist sowie alle Neuronen, die benachbart zu dem entsprechenden Neuron in der Eingangsschicht und der Ausgangsschicht sind.

**4.** Lernverfahren nach Anspruch 1, wobei das Lernverfahen ein Verfahren zum Erkennen von Zeichen ist, wobei das Aktivierungsmuster der Eingangsschicht charakteristischen Daten eines Bildes entspricht und das Aktivierungsmuster in der Ausgangsschicht Zeichendaten des Bildes entspricht.

**Revendications**

**1.** Méthode d'apprentissage pour transformer un réseau non formé en un réseau formé, ledit réseau comprenant une couche d'entrée (31), une couche centrale (32), et une couche de sortie (33), chaque dite couche incluant une pluralité de neurones, chaque dit neurone étant un élément de traitement de signaux, ladite couche centrale étant disposée entre lesdites couches d'entrée et de sortie, où chaque neurone dans ladite couche centrale est connecté à chaque neurone dans lesdites couches d'entrée et de sortie, ladite méthode comprenant les étapes consistant à :

déterminer une configuration de mise à l'état actif desdits neurones dans ladite couche d'entrée ;

déterminer une configuration de mise à l'état actif desdits neurones dans ladite couche de sortie ;

définir deux voisinages desdits neurones dont un dans chacune desdites couches d'entrée et de sortie correspondant à un neurone dans ladite couche centrale ;

déterminer un taux de mise à l'état actif dans ledit voisinage des neurones, ledit taux étant le nombre total de neurones devenant actifs dans ledit voisinage desdites couches d'entrée et de sortie, divisé par le nombre total de neurones dans ledit voisinage desdites couches d'entrée et de sortie ;

comparer ledit taux à une valeur de seuil ;

déterminer que ledit neurone dans ladite couche centrale a tendance à devenir actif quand ledit taux est supérieur à ladite valeur de seuil ;

si ledit neurone dans ladite couche centrale a tendance à devenir actif, augmenter la valeur des poids appliqués à tous les neurones dans ladite couche d'entrée qui sont connectés audit neurone dans ladite couche centrale et des poids appliqués à tous les neurones dans ladite couche de sortie qui sont connectés audit neurone dans ladite couche centrale, afin d'augmenter la probabilité de mise à l'état actif dudit neurone dans ladite couche centrale ; et,

répéter les étapes ci-dessus pour chaque dit neurone dans ladite couche centrale, en générant ainsi une configuration de mise à l'état actif voulue des neurones dans ladite couche centrale correspondant audit réseau formé.

2. Méthode d'apprentissage selon la revendication 1, incluant en outre les étapes consistant à :

a. ajouter une couche centrale supplémentaire entre ladite couche d'entrée et ladite couche centrale ou entre ladite couche centrale et ladite couche de sortie, ladite couche centrale supplémentaire comportant une pluralité de neurones ;

b. connecter chaque neurone dans ladite couche centrale supplémentaire à chaque neurone dans les deux couches adjacentes à ladite couche centrale supplémentaire ;

c. définir deux voisinages des neurones dont un dans chacune desdites couches adjacentes correspondant à un neurone dans ladite couche centrale supplémentaire ;

d. déterminer un taux de mise à l'état actif dans ledit voisinage des neurones, ledit taux étant le nombre total de neurones devenant actifs dans ledit voisinage, divisé par le nombre total de neurones dans ledit voisinage ;

e. comparer ledit taux à une valeur de seuil ;

f. si ledit taux est supérieur à la valeur de seuil, augmenter la valeur des poids appliqués à tous les neurones dans une desdites couches adjacentes qui sont connectés audit neurone dans ladite couche centrale supplémentaire et des poids appliqués à tous les neurones dans ladite autre couche adjacente qui sont connectés audit neurone dans ladite couche centrale supplémentaire, afin d'augmenter la probabilité que ledit neurone soit actif dans ladite couche centrale supplémentaire ; et,

g. répéter les étapes c.-f. pour chaque neurone dans ladite couche centrale supplémentaire, en générant ainsi une configuration voulue de neurones actifs dans ladite couche centrale supplémentaire correspondant audit réseau formé.

3. Méthode d'apprentissage selon la revendication 1, dans laquelle ledit voisinage comprend un neurone dans ladite couche d'entrée et un neurone dans ladite couche de sortie correspondant à la même position que ledit neurone dans ladite couche centrale et tous les neurones adjacents audit neurone dans ladite couche d'entrée et ladite couche de sortie.

4. Méthode d'apprentissage selon la revendication 1, dans laquelle ladite méthode d'apprentissage est une méthode pour reconnaître des caractères, ladite configuration des neurones actifs dans ladite couche d'entrée correspond aux données caractéristiques d'une image, et ladite configuration des neurones actifs dans ladite couche de sortie correspond à des données de caractère de ladite image.

Fig. 1

Fig. 2

Fig. 3

Fig. 4

Fig. 5

Fig. 6

Fig. 7

Fig. 8